# EUROPEAN PATENT SPECIFICATION

(11) **EP 1 086 837 B1**
(45) Date of publication and mention of the grant of the patent: **21.06.2006**
(21) Application number: 00915452.7
(22) Date of filing: 10.04.2000
(51) Int. Cl.: B60H 1/00, B60H 1/24

(54) **AIR CONDITIONER FOR VEHICLE**
KLIMAANLAGE FÜR FAHRZEUG
CLIMATISEUR DESTINE A UN VEHICULE

(30) Priority: 09.04.1999 JP 10334399
(43) Date of publication of application: 28.03.2001
(73) Proprietor: MITSUBISHI HEAVY INDUSTRIES, LTD., Tokyo 100-8315 (JP)
(72) Inventor: ITO, Jun, Mitsubishi Heavy Ind., Ltd., Nishi-kasugai-gun, Aichi 452-8561 (JP); NISHIJIMA, Hideya, Mitsubishi Heavy Ind., Ltd, Nishi-kasugai-gun, Aichi 452-8561 (JP)
(74) Representative: Brykman, Georges
(86) International application number: PCT/JP2000/002315
(87) International publication number: WO 2000/061395

(56) References cited:
- EP-A- 1 020 308
- DE-A1- 4 243 165
- JP-A- 5 286 346
- JP-U- 4 115 915
- JP-U- 57 188 517
- JP-U- 60 182 214

## Description

### Technical Field

The present invention relates to an air conditioning system for cooling and heating vehicles installed in a vehicle such as an automobile for cooling, heating or performing other such air conditioning to the interior of the vehicle. More specifically, the present invention relates to an air conditioning system for a vehicle designed to highly efficiently circulate the adjusted air when operating in the heating mode.

### Background Art

Air conditioning systems for vehicles, which enable the provision of a comfortable environment for vehicle occupants by adjusting the climate inside the automobile, etc., are composed of an air conditioning unit, provided with a blower fan, an evaporator, a heater core and various dampers; a cooling system for providing low-temperature and low-pressure liquid coolant to the evaporator inside the air conditioning unit; a heating system for introducing high-temperature engine cooling water to the heater core inside the air conditioning unit; and a controller for controlling operation of the air conditioning system for a vehicle according to a variety of conditions such as temperature, humidity, amount of solar radiation, occupant preference, and the like.

In the case of a general sedan passenger car, the air conditioning unit in the above-described air-conditioning system is provided inside the vehicle below the dashboard at the passenger seat side as seen from within the car. The interior air intake port for drawing in air from inside the vehicle opens below the dashboard at the passenger seat side.

The following operating modes can be selected for the above-described air conditioning system by opening or closing the various dampers provided inside the air conditioning unit.

In a "defroster mode", defroster outlet ports blow warm and dehumidified air directly onto the inner surface of the windshield in order to remove frost during winter operation, or fog during rainy weather operation.

In a "face mode", face-level outlet ports blow cool air toward the upper bodies of the occupants when mainly operating in the cooling mode during the summer season.

In a "foot mode", foot-level outlet ports blow warm air toward the occupants' feet when mainly operating in the heating mode during the winter season.

A "bi-level mode" is employed primarily during the transitional seasons of spring or fall, and is controlled for blowing adjusted air from both the face-level outlet ports and the foot-level outlet ports. In this case, the air blown from the face-level outlet ports is typically cooler than the air blown from the foot-level outlet ports, so that the occupants' heads are cool while their feet are warm.

A "blend mode" is employed in the winter and adjusted air blows from both the defroster outlet ports and the foot-level outlet ports.

By opening or closing interior/exterior air switching dampers provided to the air conditioning unit, the above-described conventional air conditioning system can be selectively operated in either an interior air circulation mode in which interior air is drawn in the air conditioning system, adjusted, and then blown into the interior of the vehicle, or an exterior air introduction mode in which exterior air is introduced into the air conditioning system, adjusted, and then blown into the interior of the vehicle.

The intake port for drawing interior air into the air conditioning unit is provided to the front and bottom area of the vehicle, typically underneath the dashboard at the passenger seat side of the vehicle, in the above-described conventional air conditioning system. For this reason, air does not sufficiently circulate throughout the entire interior of the vehicle when operating in the interior air circulation mode. In particular, in the case of the "foot mode" or "defroster mode" in which heating is performed, warm air is circulated only around the front seats. As a result, air stagnates at the rear seat so that the rear area of the vehicle is not sufficiently heated.

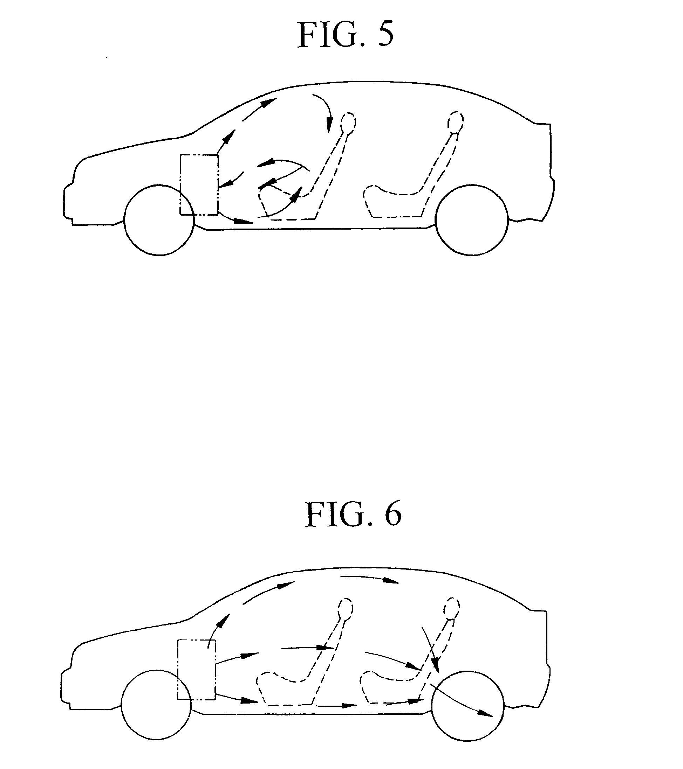

The arrows in Fig. 5 indicate the flow of the adjusted air during the interior air circulation mode. In the "defroster mode", warm air is blown upward along the windshield glass, while in the "foot mode", warm air is blown toward the occupants' feet. As a result, air flow to the rear interior of the vehicle is relatively weak. Furthermore, interior air is drawn in by the intake ports in front of the front passenger seat, so that a negative pressure region results toward the front lower area relatively close to the warm air outlet ports inside the vehicle. As a result, regardless of the mode of operation, much of the warm air which is blown out circulates in the front seat only, and is then drawn back into the air conditioning unit without sufficiently reaching the rear area of the vehicle. Thus, the air around the rear passenger seat tends to stagnate, which is not desirable in terms of air conditioning.

On the other hand, the arrows in Fig. 6 indicate the flow of adjusted air when operating in the exterior air introduction mode. Since the pressure inside the vehicle becomes higher than outside, an amount of air roughly equal to the volume of exterior air introduced is expelled from a rear ventilation (not shown) that is installed to the rear of the vehicle body and is equipped with a one-way valve. As a result, an area of negative pressure is formed to the rear interior of the vehicle, so that the adjusted air which is blown out from the defrosting ports, the foot-level ports, and the like, passes through the rear of the vehicle and is expelled to the outside.

Document DE 42 43 165, which is considered as the closest prior art, discloses such

an air conditioning system for a vehicle, comprising: an air conditioning unit that is equipped with: an interior/exterior air box provided with an interior/exterior air switching damper in which there are an interior air introduction port and an exterior air introduction port and which is for selectively switching introduced air to either interior air or exterior air, a blower which is provided with a blower fan which draws in the introduced air and blows it downstream, a cooler provided with an evaporator which performs heat exchange between a coolant and the introduced air passing there through, a heater core provided inside a heater which heats the introduced air passing through the heater, an air mix damper which adjusts the flow of the introduced air passing through the heater core, and a plurality of outlet ports which open in a case and are each provided with dampers; circulating interior air intake ports, a plurality of which open at different sites within the vehicle and which are connected with the interior air introduction ports via ducts; a cooling system equipped with: a compressor for compressing a gaseous coolant, a condenser for condensing the high-pressure gas coolant and carrying out heat exchange with the exterior air, and an expansion valve which renders a high-temperature and high-pressure liquid coolant into a low-temperature and low-pressure liquid coolant, the cooling system providing low-temperature and low-pressure liquid coolant to the evaporator; a heating system for introducing engine cooling water to the heater core; and a controller for controlling the operation of the air conditioning unit, cooling system, and heating system.

In consideration of the above-described problems and having as its objective the provision of a vehicle air conditioning system which enables circulation of adjusted air throughout the entire interior of the vehicle without the air stagnating at the rear passenger seat, even when operating in the interior air circulation mode, document JP 60 182214 U discloses en air conditioning system wherein at least one circulating interior air intake port is provided to the rear interior of the vehicle.

An area of negative pressure is formed to the rear of the vehicle interior in a vehicle air conditioning system of this type, so that the adjusted air blown out can be circulated to the rear of the vehicle interior.

In order to further improve the air circulation within the vehicle, the present invention provides an air conditioning system for a vehicle wherein the circulating interior air intake ports are provided at the center and rear areas of the vehicle interior, and wherein aa selective switching means for communicating either the center or rear areas of the vehicle to the interior air intake ports is provided.

It is preferable to provide circulating interior air intake ports to a central location between the driver's seat and the front passenger seat, and to one site each on the left and right sides at the rear area of the vehicle.

The circulating interior air intake port may be provided to a lower area within the vehicle.

By means of this type of air conditioning device for a vehicle, it is possible to selectively switch the circulation method as appropriate, so that, for example, adjusted air can be circulated in the front area of the vehicle, or can be circulated throughout the entire vehicle interior, according to where the passengers are seated.

### Brief Description of Drawings

Fig. 1 is a cross-sectional view showing the structure of the air conditioning unit according to an embodiment of the present invention.
Fig. 2 is a block diagram showing the approximate structure of an air conditioning system for a vehicle.
Fig. 3 is top view showing an example of the disposition of the circulation intake port switching damper, the duct and the circulation intake port of Fig. 1.
Fig. 4 is a front view (right side view of the vehicle body) of Fig. 3.
Fig. 5 is a view showing the flow of air when operating in the interior air circulation mode in the conventional vehicle air conditioning system.
Fig. 6 is a view showing the flow of air when operating in the exterior air circulation mode in the conventional vehicle air conditioning system.

### Best Mode for Carrying Out the Invention

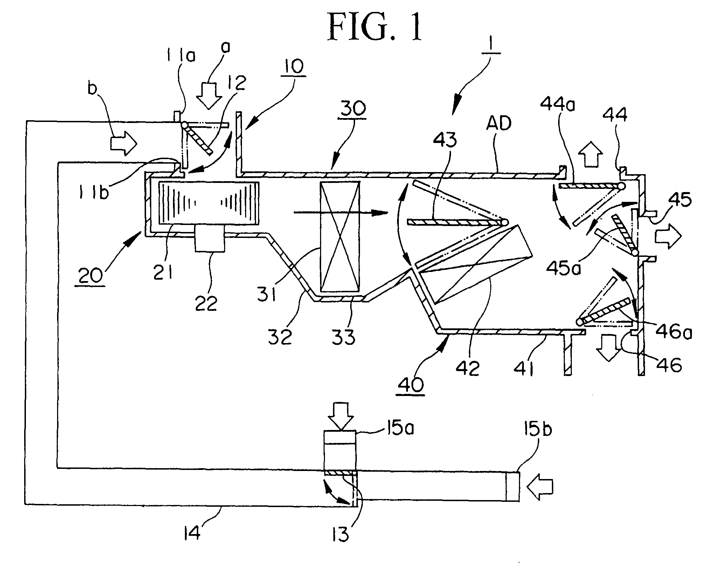

Preferred embodiments of the present invention will now be explained based on the Figs. Figs. 1 to 4 are views showing the structure of the air conditioning system for a vehicle according to the present invention. This air conditioning system for a vehicle is broadly composed of an air conditioning unit 1 for performing such air conditioning as cooling and heating; a cooling system 2 for providing coolant to the air conditioning unit 1 when operating in the cooling mode; a heating system 3 for providing engine cooling water to the air conditioning unit 1 as a heating source when operating in the heating mode; and a controller 4 for controlling the overall operation of the system.

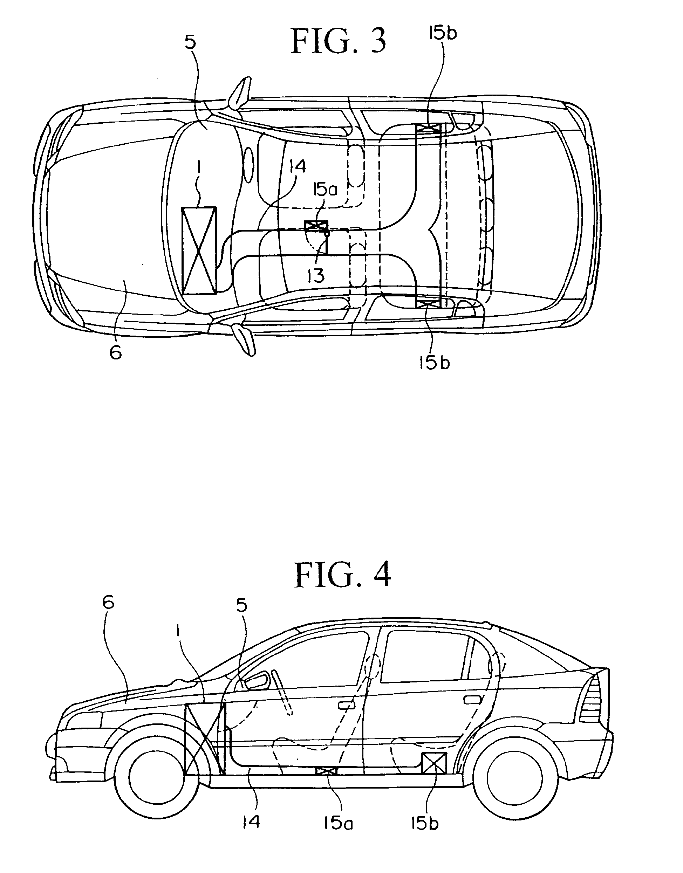

As shown in Fig. 1, an interior/exterior air box 10, a blower 20, a cooler 30, and a heater 40 form a unitary structure in air conditioning unit 1. In the case of a general sedan passenger car, this air conditioning unit 1 is disposed below dashboard 5 at the front the passenger seat side on the left when viewed from the interior of the car, as shown in Figs. 3 and 4. Air conditioning unit 1 will now be explained according to the sequence of air flow.

As shown in Fig. 1, the interior/exterior air box 10 has the function of switching the air to be introduced into the air conditioning unit 1 to either exterior air a (i.e., air from outside the vehicle) or interior air b (i.e., air from inside the vehicle). An exterior air introduction port 11a communicating with the outside of the vehicle and an interior air introduction port 11b communicating with the inside of the vehicle are provided. The air to be introduced (hereinafter referred to as "introduced air") is selected by employing interior/exterior air switching damper 12 to close one of either introduction ports 11a or 11b.

The blower 20 is provided connecting downstream to the interior/exterior air box 10, and functions by means of the action of a blower fan 21 to selectively draw in exterior air a or interior air b and blow it to the cooler 30 explained below. This blower fan 21 employs an electric motor 22 as a driving source and is usually capable of switching between various air capacities in addition to the off position. Furthermore, in the case where introducing the exterior air a while the vehicle is moving, the exterior air a can flow to cooler 30 even if the blower fan 21 is stopped.

The cooler 30 functions to cool and dehumidify from the introduced air blown in from the blower 20. This cooler 30 is composed of an evaporator 31, which is a heat exchanger, and a case 32, which houses this evaporator 31.

The evaporator 31 is supplied low-temperature and low pressure liquid coolant from the cooling system 2 explained below when operating in the cooling mode. Furthermore, the evaporator 31 performs a heat exchange between the liquid coolant and the introduced air which is passing through the evaporator 31 after being blown in from the blower 20. As a result, heat from the introduced air is drawn off by the coolant, to become cooled, dehumidified cool air which is then introduced to the heater 40 explained below.

The case 32 is a resin molded part forming a part of an air conditioning duct AD that serves as the flow path for the introduced air. The case 32 is separated into two upper and lower parts in order to facilitate assembly of the evaporator 31. A drain pan 33 is formed to the lower surface of the case 32 for collecting and expelling the condensed water that is generated on the surface of the evaporator 31.

The heater 40 selectively heats the introduced air blown in from the cooler 30, while at the same time blowing out the adjusted air from the outlet ports according to the operating mode. This heater 40 is composed of a heater core 42 disposed inside a case 41, an air mix damper 43 for adjusting the flow of the introduced air passing through the heater core 42, and outlet ports 44, 45, and 46 provided with dampers 44a, 45a, and 46a which are present in the case 41 and can be opened and closed respectively.

The case 41 forms a part of the air conditioning duct AD. The defroster outlet ports 44, face-level outlet ports 45, and foot-level outlet ports 46 are provided to the case 41, and a defroster damper 44a, a face damper 45a, and a foot damper 46a are attached to each of these outlet ports respectively.

The heater core 42 is supplied high temperature engine cooling water from the heating system 3 explained below when operating in the heating mode. The heater core 42 is a heat exchanger for heating the introduced air blown in from the cooler 30. The introduced air sent to the heater 40 is separated into a portion which passes through the heater core 42 and a portion which does not pass through the heater core 42, depending on the degree to which the air mix damper 43 is open.

The above-described defroster outlet ports 44 blow warm and dehumidified air directly onto the inner surface of the windshield, for example, in order to remove frost from the windshield during winter operation and fog from the windshield during rainy weather operation. This operational mode is referred to as the "defroster mode".

The face-level outlet ports 45 blow cool air toward the upper bodies of the occupants when mainly operating in the cooling mode during the summer season. This operational mode is referred to as the "face mode".

The foot-level outlet ports 46 blow warm air toward the occupants' feet and are mainly for heating during the winter season. This mode is referred to as the "foot mode".

Furthermore, the operational mode referred to as the "bi-level mode" is employed primarily during the transitional seasons of spring or fall, and is for blowing adjusted air from both face-level outlet ports 45 and foot-level outlet ports 46. In this case, the air blown from face-level outlet ports 45 is typically cooler than the air blown from foot-level outlet ports 46, so that the occupants' heads are cool while their feet are warm.

The mode referred to as the "blend mode" is employed in the winter and blows adjusted air from both defroster outlet ports 44 and foot-level outlet ports 46.

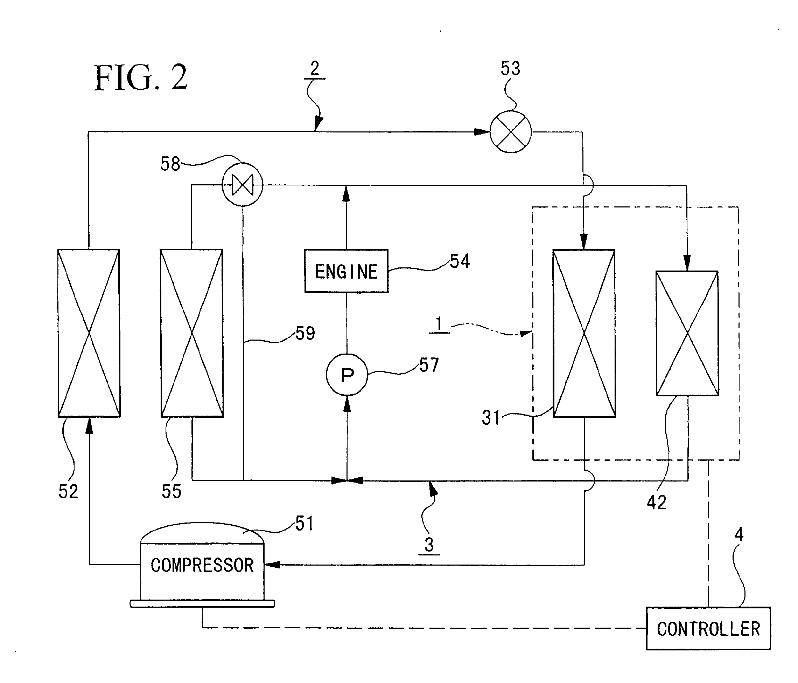

Next, the structure of the cooling system 2 will be explained based on Fig. 2. This cooling system 2 supplies low temperature and low pressure liquid coolant to the evaporator 31, and is provided with a compressor 51, a condenser 52, and an expansion valve 53. Note that this cooling system 2 as well as evaporator 31 may be omitted in the case where a cooling and dehumidifying function is not necessary.

The compressor 51 compresses a low-temperature and low-pressure gaseous coolant which was vaporized by drawing off heat from the vehicle interior by the evaporator 31, and sends the gaseous coolant to condenser 52 as high-temperature and high-pressure gaseous coolant. In the case of an air conditioning system for an automobile, the compressor 51 typically receives its driving force from an engine 54 via a belt and clutch.

The condenser 52 is disposed to the front area of an engine room 6, and employs exterior air to cool the high-temperature and high-pressure gaseous coolant supplied from the compressor 51, condensing the gaseous coolant into a liquid coolant. This liquefied coolant is sent to a receiver (not shown in the figures), the gaseous coolant portions which are not condensed into the liquid are separated, and the coolant is then sent to the expansion valve 53 as a high-temperature and high-pressure liquid coolant. By reducing the pressure and expanding the high-temperature and high-pressure liquid coolant at the expansion valve 53, the high-temperature and high-pressure liquid coolant is rendered as a low-temperature and low-pressure liquid (mist) coolant and is supplied to the evaporator 31. The expansion valve 53 is typically disposed with the evaporator 31 to an appropriate site inside the cooler 30.

Next, a simple explanation will be made of the structure of the heating system 3 based on Fig. 2. This heating system 3 supplies high-temperature engine cooling water as a heating source to the heater core 42, and introduces a portion of the engine cooling water from the engine cooling system circulating between the engine 54 and a radiator 55 to the air conditioning system. The numeric symbols 57, 58, and 59 in this figure indicate a pump for circulating cooled water, a thermostat, and a bypass, respectively.

Lastly, a simple explanation will be made of the structure of the controller 4 based on Fig. 3. The controller 4 controls the operation of the air conditioning unit 1, the cooling system 2, and the heating system 3 which form the air conditioning system. The controller 4 typically incorporates a control circuit in the operation panel at which the vehicle's occupants perform various settings. The controller 4 is provided to the center of the instrument panel. The controller 4 controls operations to switch the interior/exterior air switching damper 12, selectively switch between various operating modes by opening and closing the dampers, change the air capacity of the blower fan 21, set the desired temperature, and open and close a circulation intake switching damper 13 explained below.

By driving the blower fan 21 in the air conditioning system for a vehicle designed as described above, exterior air a or interior air b is introduced into the air conditioning ducts AD from exterior air introduction ports 11a or interior air introduction ports 11b in the interior/exterior air box 10. This introduced air passes through the blower 20 and is sent to downstream cooler 30 in the air conditioning duct AD. The introduced air flowing through the cooler 30 passes through the evaporator 31, and undergoes heat exchange with the coolant when operating in the cooling mode in which a low-temperature and low-pressure liquid coolant is supplied from the cooling system 2. As a result, this introduced air is cooled and dehumidified, and then flows to downstream heater 40 in the air conditioning duct AD.

When the air mix damper 43 covers the entire path on the heater core 42 side, then the entire volume of the cooled, dehumidified introduced air sent to the heater 40 does not pass through the heater core 42, but is directed to the various outlet ports 44, 45, and 46, so that cool air is blown into the vehicle interior from the outlet ports which have open dampers. When the air mix damper 43 opens the entire path on the heater core 42 side, then all of the introduced air passes through the heater core 42, and is heated, so that warm air is blown into the vehicle interior from the outlet ports which have open dampers. When the air mix damper 43 is located at an intermediate position, cool air which does not pass through the heater core 42 and warm air which does pass through the heater core 42 are mixed on the downstream side of the air mix damper 43 according to the degree to which the damper is open. This air which has been adjusted to the desired temperature in this way is then blown into the vehicle interior from the outlet ports which have open dampers according to the operating mode selected.

In the air conditioning system of the present invention, a duct 14 passing through the vehicle interior is connected with the interior air introduction port 11b of the above-described air conditioning unit 1, and opens circulation intake ports 15a and 15b at various sites in the vehicle interior. In the embodiment shown in Figs. 3 and 4, a front seat circulation intake port 15a is disposed opening in the lower area between the driver's seat and the front passenger seat. Rear seat circulation intake ports 15b are disposed opening on both ends of the left and right below the rear seat. In other words, these circulation intake ports are provided at a total of three sites.

By providing circulation intake ports to a plurality of sites inside the vehicle in this way, areas of negative pressure are formed at these various sites due to the operation of the blower fan 21. Specifically, if at least one circulation intake port is disposed to the rear of the vehicle interior, then the adjusted air blown into the vehicle interior from the area in front of the driver's seat is drawn by the negative pressure area formed to the rear of the vehicle interior as well. As a result, a circulation path is formed extending across the entire area of the vehicle interior enabling the adjusted air to reach the rear of the vehicle interior. The location and number of these circulation intake ports can of course be suitably altered according to the various dispositions and shapes within the vehicle.

In addition to the disposition of the above-described circulation intake ports 15a and 15b, the circulation intake switching damper 13 is provided to the branch point of the duct 14 where the front seat circulation intake port 15a and the rear seat circulation intake ports 15b branch off. Only one of either or the circulation intake ports can be selected to communicate with the air conditioning unit 1.

In addition to completely closing one of the above circulation intake ports, it is also possible to suitably adjust the degree to which the circulation intake switching damper 13 is open at an intermediate position in accordance with various conditions.

The functions of the circulation intake switching damper 13, the front seat circulation intake port 15a, and the rear seat circulation intake ports 15b will now be explained.

The case where operating in "defroster mode" will be explained first. The main objective of this defroster mode is the removal of frost from the windshield or fog from the windshield during rainy weather operation. Warm dehumidified air (adjusted air) is blown upward directly onto the inner surface of the windshield, etc. from the defroster outlet ports 44. Accordingly, the main flow of the adjusted air blown out travels along the windshield and rises to the roof of the vehicle.

In the interior air circulation state, when only the front seats are occupied when operating in this defroster mode, i.e., when only the driver and a front seat passenger are present, then the rear seat circulation intake ports 15b are closed by operating the circulation intake port switching damper 13. As a result, only front seat circulation intake port 15a communicates with the interior air introduction port 11b, so that an area of negative pressure is formed to the center area of the vehicle interior under the suction force from the operation of blower fan 21. Accordingly, the main flow of adjusted air which has risen to the roof of the vehicle is altered to a downward flow direction toward this area of negative pressure. The adjusted air is drawn in by the front seat circulation intake port 15a without reaching the rear seats, so that adjusted air can be circulated with good efficiency only in the front seat area where the occupants are located.

In contrast, when circulating interior air in the case where occupants are also seated in the rear seat, the front seat circulation intake port 15a is closed by operating the circulation intake port switching damper 13, so that the rear seat circulation intake ports 15b communicate with the interior air introduction port 11b. As a result, an area of negative pressure is formed to the rear area of the vehicle interior under the suction force from the operation of the blower fan 21. Accordingly, the adjusted air which has risen to the roof of the vehicle flows over the front seat to the rear seat, and is ultimately drawn in by the rear seat circulation intake ports 15b. In other words, a large circulation flow path is formed extending over the entire interior of the vehicle. Accordingly, stagnation of the interior air at the rear of the vehicle interior is eliminated, making it possible to effectively condition the air of the entire vehicle interior.

The "foot mode" primarily has the objective of blowing out warm air toward the occupants' feet when operating the heating mode during the winter season. In general, the exterior air introduction mode is employed to improve the dehumidifying effect, however, the interior air circulation mode may also be employed to increase heating efficiency.

When only the front seats are occupied in this case, then the rear seat circulation intake port 15a is closed by operating the circulation intake port switching damper 13. Furthermore, the adjusted air (warm air) blown toward the occupants' feet from the foot-level outlet port 46 is circulated around the front seat area only. As a result, the heating load is reduced, enabling comfortable heating of the front seat occupants to be carried out with good efficiency.

In contrast, when heating in the case where occupants are also seated in the rear seat, the front seat circulation intake port 15a is closed by operating the circulation intake port switching damper 13, so that the rear seat circulation intake ports 15b communicate with the interior air introduction port 11b. As a result, an area of negative pressure is formed to the rear area of the vehicle interior under the suction force from the operation of blower fan 21. Accordingly, the warm air blown out from the foot-level outlet port 46 passes under the front seat to the rear seat, and is ultimately drawn in by the rear seat circulation intake ports 15b. In other words, a large warm air circulation flow path is formed extending over the entire interior of the vehicle. Sufficient warm air is supplied to the feet of occupants seated in the rear, so that comfortable heating is performed. Accordingly, stagnation of the interior air at the rear of the vehicle interior is eliminated, making it possible to effectively condition of the air of the entire vehicle interior.

Note that when operating in interior air circulation modes other than the above-described "defroster mode" and "foot-level mode", i.e., the "face-level mode", "bi-level mode", and "blend mode", it is also possible to even further improve the interior air circulating state by opening or closing the circulation intake port switching damper 13 according to where the vehicle's occupants are seated. Thus, stagnation of interior air at the rear seat is eliminated, making it possible to carry out comfortable air conditioning.

### Industrial Applicability

By providing a plurality of circulation intake ports to the vehicle interior, the adjusted air blown out from the front area of the vehicle interior is circulated over the entire area inside the vehicle when operating in the interior air circulation mode. Specifically, if one circulation intake port is proved to the rear of the vehicle interior, then stagnation of air at the rear seat can be eliminated, making it possible to provide a vehicle air conditioning system capable of comfortable and stable operation.

According to the above described present invention, a damper was provided as a selective switching means for the circulation intake ports. As a result, it is possible to select the comfortable adjusted air circulation flow path within the vehicle for the case where occupants are present only in the front seat and the case where occupants are present in both the front and rear seats. Accordingly, the present invention makes it possible to provide a comfortable, highly efficient vehicle air conditioning system.

## Claims

1. An air conditioning system (1) for a vehicle comprising:
an air conditioning unit that is equipped with:
an interior/exterior air box (10) provided with an interior/exterior air switching damper (12) in which there are an interior air introduction port (11a) and an exterior air introduction port (11b) and which is for selectively switching introduced air to either interior air or exterior air, a blower (20) which is provided with a blower fan (21) which draws in the introduced air and blows the introduced air downstream,
a cooler (30) provided with an evaporator (31) which performs heat exchange between a coolant and the introduced air passing there through,
a heater core (42) provided inside a heater (40) which heats the introduced air passing through the heater,
an air mix damper (43) which adjusts the flow of the introduced air passing through the heater core (42), and
a plurality of outlet ports (44,45,46) which open in a case and are each provided with dampers (44a,45a,46a),
circulating interior air intake ports (15), a plurality of which open at different sites within the vehicle and which are connected to the interior air introduction ports via ducts (14);
a cooling system (2) equipped with:
a compressor (51) for compressing a gaseous coolant,
a condenser (52) for condensing the high-pressure gas coolant and carrying out heat exchange with the exterior air, and
an expansion valve (53) which renders a high-temperature and high-pressure liquid coolant into a low-temperature and low-pressure liquid coolant,
the cooling system (2) providing low-temperature and low-pressure liquid coolant to the evaporator (31);
a heating system (3) for introducing engine cooling water to the heater core (42); and a controller (4) for controlling the operation of the air conditioning unit, cooling system (2), and heating system (3),
**characterized in that**
the circulating interior air intake ports (15) are disposed to the center and rear areas of the vehicle interior and
a selective switching means provided to communicate any one of the circulating interior air intake ports (15) disposed to the center and rear areas of the vehicle interior with the interior air introduction port.

2. An air conditioning system for a vehicle according to claim 1, wherein the circulating interior air intake port is disposed to one site between the driver's seat and the front passenger's seat, and to one site each on the left and right sides of the rear area.

3. An air conditioning system for a vehicle according to claim 1, wherein the circulating interior air intake port is disposed to the bottom area of the vehicle interior.

## Patentansprüche

1. Klimaanlage (1) für ein Fahrzeug umfassend
• eine Klimaeinheit, die ausgestattet ist
mit einer Innenraumluft/Außenluft Box (10), die ihrerseits mit einer Innenraumluft/Außenluft Schaltklappe (12), in der sich eine Einströmöffnung für Innenraumluft (11a) und eine Einströmöffnung für Außenluft (11b) befinden, und die dazu dient, wahlweise auf einströmende Innenraumluft oder auf einströmende Außenluft zu schalten, und einem Gebläse (20) versehen mit einem Gebläselüfter (21), der die einströmende Luft ansaugt und diese abwärts bläst, ausgerüstet ist;
mit einem Kühler (30) ausgestattet mit einem Verdampfer (31), der einen Wärmeaustausch zwischen einem Kältemittel und der einströmenden, dort durchziehenden Luft ausführt;
mit einem Heizkern (42), der sich in einem Heizer (40) befindet, der die einströmende, durch den Heizer ziehende Luft erwärmt;
mit einer Luftmischklappe (43), die den Fluss der einströmenden, durch den Heizkern (42) ziehenden Luft steuert; und
mit mehreren Auslassöffnungen (44, 45, 46), die sich in ein Gehäuse öffnen und jeweils mit Klappen (44a, 45a, 46a) versehen sind;
• Einlassöffnungen für Innenraumumluft (15), wobei mehrere von ihnen an unterschiedlichen Stellen innerhalb des Fahrzeugs offen sind und diese mit den Einströmöffnungen für Innenraumluft über Kanäle (14) verbunden sind;
• ein Kühlsystem (2), das ausgestattet ist
mit einem Kompressor (51) zum Verdichten eines gasförmigen Kältemittels;
mit einem Kondensator (52) zum Kondensieren des unter hohem Druck stehenden gasförmigen Kältemittels und zum Durchführen eines Wärmeaustauschs mit der Außenluft; und
mit einem Expansionsventil (53), das aus einem flüssigen Kältemittel mit hohem Druck und hoher Temperatur ein flüssiges Kältemittel mit niedrigem Druck und niedriger Temperatur macht,
wobei das Kühlsystem (2) dem Verdampfer (31) flüssiges Kältemittel mit niedrigem Druck und niedriger Temperatur liefert;
• ein Heizsystem (3) zum Einlassen von Motorkühlwasser in den Heizkern (42);
• und eine Steuerung (4) zum Steuern des Betriebs der Klimaeinheit, des Kühlsystems (2) und des Heizsystems (3);
**dadurch gekennzeichnet,**
**dass** die Einlassöffnungen für Innenraumumluft (15) in der Mitte und den hinteren Bereichen des Fahrzeuginneren angeordnet sind und
**dass** ein selektives Schaltmittel vorgesehen ist, um jede einzelne Einlassöffnung für Innenraumumluft (15), die in der Mitte und den hinteren Bereichen des Fahrzeuginneren angeordnet sind, mit der Einströmöffnung für Innenraumluft zu verbinden.

2. Klimaanlage für ein Fahrzeug nach Anspruch 1, **dadurch gekennzeichnet, dass** die Einlassöffnung für Innenraumumluft an einer Stelle zwischen dem Fahrersitz und dem vorderen Beifahrersitz und an jeweils einer Stelle auf der linken und rechten Seite des hinteren Bereichs angeordnet ist.

3. Klimaanlage für ein Fahrzeug nach Anspruch 1, **dadurch gekennzeichnet, dass** die Einlassöffnung für Innenraumumluft im unteren Bereich des Fahrzeuginneren angeordnet ist.

## Revendications

1. Un système de conditionnement d' air (1) pour un véhicule, comprenant :
• une unité de conditionnement d'air équipée de :
une boîte à air intérieur/extérieur (10) munie d'un registre de commutation d'air intérieur/extérieur (12), dans lequel sont prévus un orifice d'introduction d'air intérieur (11a) et un orifice d'introduction d'air extérieur (11b) et qui est prévu pour commuter sélectivement l'air introduit en air intérieur ou en air extérieur, une soufflante (20) munie d'un ventilateur de soufflante qui aspire l'air introduit et souffle en aval l'air introduit,
un refroidisseur (30) muni d'un évaporateur (31), réalisant un échange thermique entre un réfrigérant et l'air introduit passant à travers lui,
un noyau chauffeur (42) prévu à l'intérieur d'un élément chauffeur (40), chauffant l'air introduit passant à travers l'élément chauffeur,
un registre de mélange d'air (43) ajustant l'écoulement d'air introduit passant par le noyau chauffeur (42), et
une pluralité d'orifices de sortie (44, 45, 46) débouchant dans un boîtier et chacun muni de registres (44a, 45a, 46a),
• des orifices d'admission d'air intérieur de circulation (15), dont une pluralité débouche en des sites différents à l'intérieur du véhicule et qui sont connectés aux orifices d'introduction d'air intérieurs, via des conduits (14) ;
• un système de refroidissement (2), équipé de :
un compresseur (51), pour comprimer un réfrigérant gazeux,
un condenseur (52), pour condenser le réfrigérant gazeux sous haute pression et effectuer un échange thermique avec l'air extérieur, et
une soupape de détente (53), faisant passer un réfrigérant liquide, à haute pression et à haute température, en un état de réfrigérant liquide, à basse température et basse pression,
le système de refroidissement (2) fournissant à l'évaporateur (31) un réfrigérant liquide à basse température et à basse pression ;
• un système de chauffage (3) pour introduire de l'eau de refroidissement de moteur thermique vers le noyau chauffeur (42) ; et
• un contrôleur (4) pour commander le fonctionnement de l'unité de conditionnement d'air, du système de refroidissement (2) et du système de chauffage (3),
**caractérisé en ce que** :
les orifices d'admission d'air intérieurs de circulation (15) sont disposés sur les zones centrale et arrière de l'intérieur du véhicule, et
des moyens de commutation sélectifs sont prévus, pour faire communiquer l'un quelconque des orifices d'admission d'air intérieur de circulation (15), disposés au-dessus des zones centrale et arrière de l'intérieur du véhicule, avec l'orifice d'introduction d'air intérieur.

2. Un système de conditionnement d'air pour un véhicule selon la revendication 1, dans lequel l'orifice d'admission d'air intérieur de circulation est disposé en un site se trouvant entre le siège du conducteur et le siège de passager avant, et sur un site de chacun des côtés gauche et droit de la zone arrière.

3. Un système de conditionnement d'air pour un véhicule selon la revendication 1, dans lequel l'orifice d'admission d'air intérieur de circulation est disposé sur la zone inférieure de l'intérieur du véhicule.
